# EUROPEAN PATENT APPLICATION

(11) **EP 4 650 907 A1**
(43) Date of publication of application: **19.11.2025**
(21) Application number: 23923052.7
(22) Date of filing: 23.11.2023
(51) Int. Cl.: G06F 1/16, F16M 11/12, F16M 11/20

(54) **FOLDABLE STAND HAVING SLIDING HINGE STRUCTURE**

(30) Priority: 14.02.2023 KR 20230019264
(71) Applicant: PosBank Co., Ltd, Seoul 08506 (KR)
(72) Inventor: EUN, Dong Uk, Gwangmyeong-si, Gyeonggi-do 14349 (KR)
(74) Representative: ABG Intellectual Property Law, S.L.
(86) International application number: PCT/KR2023/019029
(87) International publication number: WO 2024/172253

(57) **Abstract**

Provided is a foldable stand having a sliding hinge structure, the monitor is hinge-driven with respect to the stand frame, the stand plate is hinge-driven with respect to the stand frame. According to the present invention, the stand plate supporting the monitor is formed in a foldable structure, thus having the effect of maximizing space utilization when packaging and storing a monitor set.

## Description

### TECHNICAL FIELD

The present invention relates to a foldable stand having a sliding hinge structure, in which a stand plate supporting a monitor is hinge-driven to exhibit an advantage of reduction in space required for storage and packaging.

### BACKGROUND ART

A monitor set in which a monitor is coupled with a stand is a representative shape of a display device, which is the most common shape in modern society in which usage of electronic communication information is gradually progressed. The above-described shape of the monitor set is connected to a computer or an external device for displaying an image. Alternatively, as a computer is mounted to the monitor set, the monitor set itself serves as a computer device.

On the other hand, the monitor set is generally classified into a monitor on which an image is displayed and a stand that supports the monitor. Here, since a support part (stand plate) disposed below the stand is designed to have a horizontal length in an overall structure of the monitor set, a space required for installing the monitor set is determined by a length of the support part.

Accordingly, since sizes of a usage space, a packaging space, and a storage space are determined by the length of the support part, there is a limitation in that a relatively large amount of volume is wasted in consideration of a total volume of the monitor set.

Also, when a user stores the monitor set, there is a limitation of requiring an excessive storage space.

### DISCLOSURE OF THE INVENTION

### TECHNICAL PROBLEM

The present invention provides a foldable stand in which a stand plate that supports a monitor has a foldable structure to exhibit an effect of maximizing space utilization when packaging and storing a monitor set and packaging of the monitor set using the same.

### TECHNICAL SOLUTION

In accordance with one aspect of the present invention, a foldable stand includes: a stand frame 100 coupled to a monitor 1 ; and a stand plate 200 configured to support the stand frame 100 , in which the monitor 1 is hinge-driven with respect to the stand frame 100, and the strand plate 200 is hinge-driven with respect to the stand frame 100, in which the stand frame 100 includes a hinge shaft 300 configured to hinge-drive the stand plate 200, and the hinge shaft 300 is disposed in a fixed space 211 when the stand plate 200 slides in a first direction a toward the stand frame 100 and is disposed in a rotation space 212 when the stand plate 200 slides in a second direction b toward the outside of the stand frame 100.

In this case, the stand plate 200 may include a stopper 230 configured to restrict the hinge shaft 300 in the fixed space 211.

Also, the stand plate 200 may include a top plate 210 and a bottom plate 220 coupled to a lower portion of the top plate 210, and the stopper 230 may be disposed between the top plate 210 and the bottom plate 220.

Also, a locking stepped portion 110 on which a latch 221 of the stand plate 200 is seated may be formed on the stand frame 100, the latch 221 may be seated on the locking stepped portion 110 when the stand plate 200 slides in the first direction a, and the latch 221 may be spaced apart from the locking stepped portion 110 when the stand plate 200 slides in the second direction b.

Also, the latch 221 may include: a locking pillar 2211 protruding upward from the lower plate 220; and a locking head 2212 bent toward the stand frame 100 from an upper end of the locking pillar 2211.

Also, the stopper 230 may include: a locking member 231 configured to restrain both ends of the hinge shaft 300 when the hinge shaft 300 is disposed in the fixed space 211; and an elastic member 232 configured to press the locking member 231 toward the hinge shaft 300.

Also, an insertion groove 2311 into which an end of the hinge shaft 300 is inserted may be defined in the locking member 231.

Also, when the hinge shaft 300 is disposed in the rotation space 212, a bottom surface of the hinge shaft 300 may be supported by the lower plate 220, a top surface of the hinge shaft 300 may be supported by the upper plate 210, one side surface of the hinge shaft 300 may be supported by the locking pillar 2211, and the other side surface of the hinge shaft 300 may be supported by the locking member 231.

Also, an end A of the stand plate 200 may be hinge-driven toward the stand frame 100 in a state in which the hinge shaft 300 is disposed in the rotation space 212, in which a first magnet 410 may be disposed at the end A, and a second magnet 420 having a polarity opposite to that of the first magnet 410 may be disposed at a predetermined position of the stand frame 100 that is brought into proximity to the end A by a rotation driving of the stand plate 200.

### ADVANTAGEOUS EFFECTS

In accordance with the present invention, the stand plate supporting the monitor has the foldable structure to exhibit the effect of maximizing the space utilization when packaging and storing the monitor set.

The present invention exhibits the effect of reducing the risk of damage during the transportation of the monitor set and easily unfolding the folded stand plate.

The present invention exhibits the effect of forming the stable supporting structure despite the foldable structure of the stand and improving the aesthetic value by using the outer cover of the stand frame.

### BRIEF DESCRIPTION OF THE DRAWINGS

FIG. 1 is a view illustrating a folding process of a monitor set to which a foldable stand in accordance with an embodiment of the present invention is mounted.

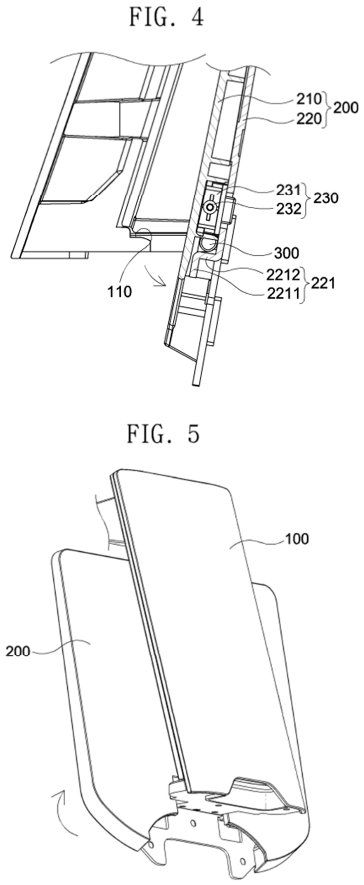

FIGS. 2 to 4 are cross-sectional views illustrating a process in which a stand plate of the foldable stand in accordance with an embodiment of the present invention is hinge-driven.
FIG. 5 is a view illustrating a folded state of the foldable stand in accordance with an embodiment of the present invention.
FIG. 6 is a cross-sectional view illustrating a stand plate of the foldable stand in accordance with an embodiment of the present invention.
FIG. 7 is a view illustrating a stand frame of the foldable stand in accordance with an embodiment of the present invention.
FIG. 8 is a view illustrating a lower plate of the stand plate in accordance with an embodiment of the present invention.

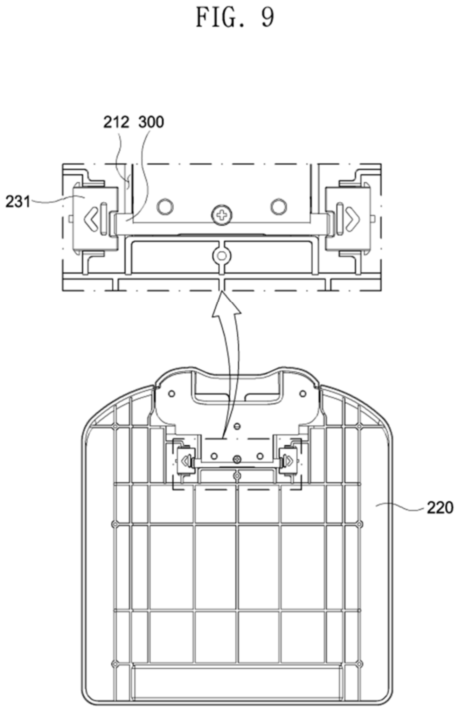

FIG. 9 is a view illustrating a state in which a hinge shaft is disposed in a fixed space in accordance with an embodiment of the present invention.
FIG. 10 is a view illustrating a state in which the hinge shaft is disposed in a rotation space in accordance with an embodiment of the present invention.
FIG. 11 is a view illustrating a first magnet and a second magnet in accordance with an embodiment of the present invention.
FIG. 12 is an exploded view illustrating the stand plate in accordance with an embodiment of the present invention.
FIGS. 13 to 16 are views illustrating packaging in accordance with an embodiment of the present invention.

### MODE FOR CARRYING OUT THE INVENTION

Hereinafter, a foldable stand and a packaging of a monitor set using the same in accordance with the present invention will be described in detail with reference to the accompanying drawings and, while describing of the accompanying drawings, the same or corresponding components are given with the same drawing number. Therefore, redundant description thereof will be omitted.

Also, though terms like a first and a second are used to describe various members, components, regions, layers, and/or portions in various embodiments of the present invention, the members, components, regions, layers, and/or portions are not limited to these terms.

When it is described that an element is "coupled to", "engaged with", or "connected to" another element, it should be understood that the element may be directly coupled or connected to the other element but still another element may be "coupled to", "engaged with", or "connected to" the other element between them.

The present invention relates to a foldable stand adopting a method in which a lower structure of a stand supporting a monitor 1 is folded to enhance a spatial efficiency in packaging and storage of a monitor set (a coupled body of the monitor and the foldable stand).

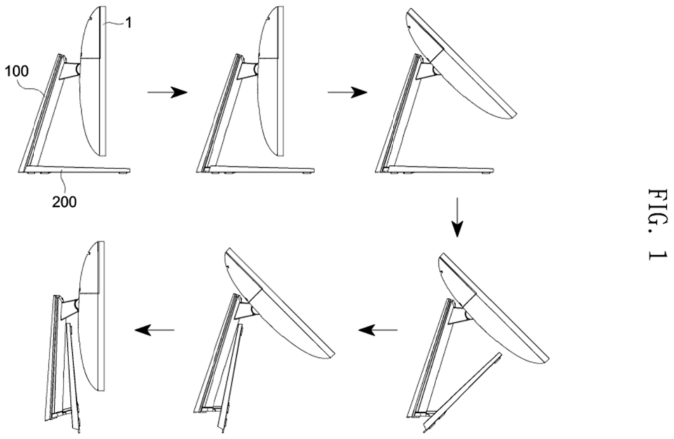

The foldable stand in accordance with an embodiment of the present invention includes a stand frame 100 coupled to the monitor 1 and a stand plate 200 supporting the stand frame 100 (refer to FIG. 1).

A folding structure may be formed in such a manner that the monitor 1 is hinge-driven with respect to the stand frame 100, and the stand plate 200 is also hinge-driven with respect to the stand frame 100. Specifically, as illustrated in FIG. 1, the monitor 1 is hinge-driven upward with respect to the stand frame 100, and then, the stand plate 200 is hinge-driven with respect to the stand frame 100 and folded inside the monitor 1.

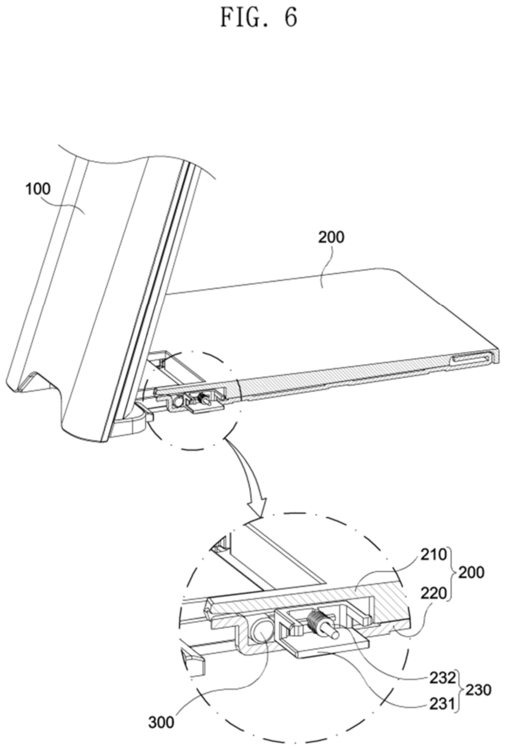

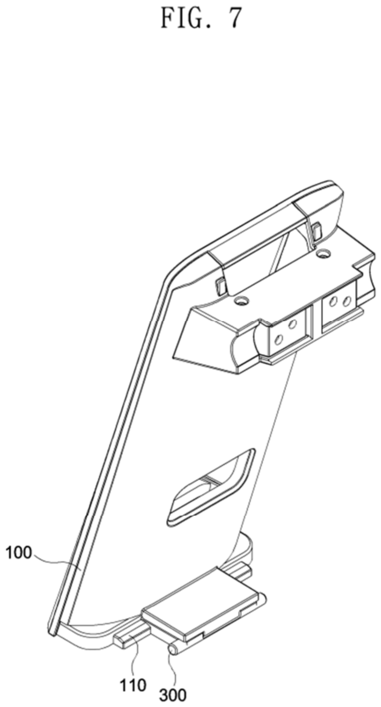

The stand frame 100 of the foldable stand in accordance with an embodiment of the present invention may include a hinge shaft 300 for hinge-driving the stand plate 200 (refer to FIGS. 6 and 7).

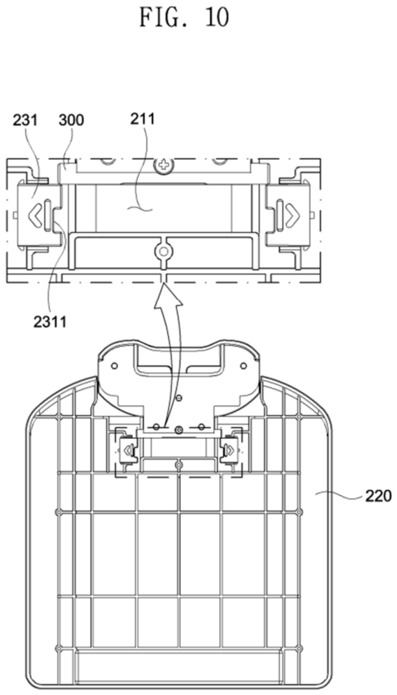

The hinge shaft 300 may be disposed in a fixed space 211 when the stand plate 200 slides in a first direction a toward the stand frame 100 (refer to FIG. 7) and disposed in a rotation space 212 when the stand plate 200 slides in a second direction b toward the outside of the stand frame 100 (refer to FIG. 10).

When the hinge shaft 300 is disposed in the rotation space 212, a hinge-driving of the stand plate 200 may be performed with respect to the stand frame 100 as illustrated in FIG. 1. However, when the hinge shaft 300 is disposed in the fixed space 211, the hinge-driving of the stand plate 200 may be restricted as the hinge shaft 300 is fixed by a stopper 230 and a latch 221 is seated on a locking stepped portion 110.

Thus, when a monitor set to which the foldable stand in accordance with the present invention is mounted is used, the hinge shaft 300 may be disposed in the fixed space 211 to form a safe structure for use during a normal operation and may be moved to the rotation space 212 so that the stand plate 200 is hinge-driven and folded during transport or storage of the monitor set.

The foldable stand in accordance with an embodiment of the present invention may include a stopper 230 that restrains the hinge shaft 300 in the fixed space 211 (refer to FIG. 10).

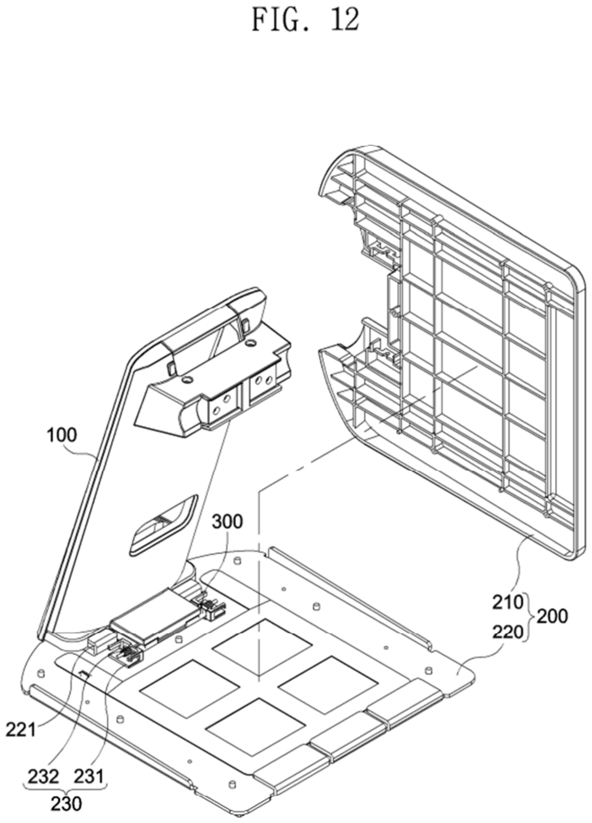

The stand plate 200 in accordance with an embodiment of the present invention may include an upper plate 210 and a lower plate 220 coupled to a lower portion of the upper plate 210. In this case, the stopper 230 may be disposed between the upper plate 210 and the lower plate 220 (refer to FIG. 12).

A lower cover 240 may be additionally mounted to a bottom surface of the lower plate 220 of the stand plate 200.

The stopper 230 in accordance with an embodiment of the present invention may include a locking member 231 that restrains both ends of the hinge shaft 300 when the hinge shaft 300 is disposed in the fixed space 211 and an elastic member 232 that presses the locking member 231 in a direction toward the hinge shaft 300 (refer to FIGS. 6 and 10).

In this case, an insertion groove 2311 into which an end of the hinge shaft 300 is inserted may be formed in the locking member 231, and, when the hinge shaft 300 is disposed in the fixed space 211, the end of the hinge shaft 300 may be inserted into the insertion groove 2311 to restrict a movement of the hinge shaft 300.

Also, since the locking member 231 is exposed to the outside through an exposure hole 222 defined in the lower plate 220, a user may move the locking member 231 to both sides to move the hinge shaft 300 from the fixed space 211 to the rotation space 212. Thereafter, the locking member 231 may automatically return to an original position thereof by the elastic member 232.

Hereinafter, what structure restrains the hinge-driving of the hinge shaft 300 in the fixed space 211 and how the hinge-driving is performed in the rotation space 212 will be described.

Firstly, when the hinge shaft 300 is disposed in the fixed space 211, the latch 221 is seated on the locking stepped portion 110 that will be described later to restrict a rotational driving of the stand plate 200.

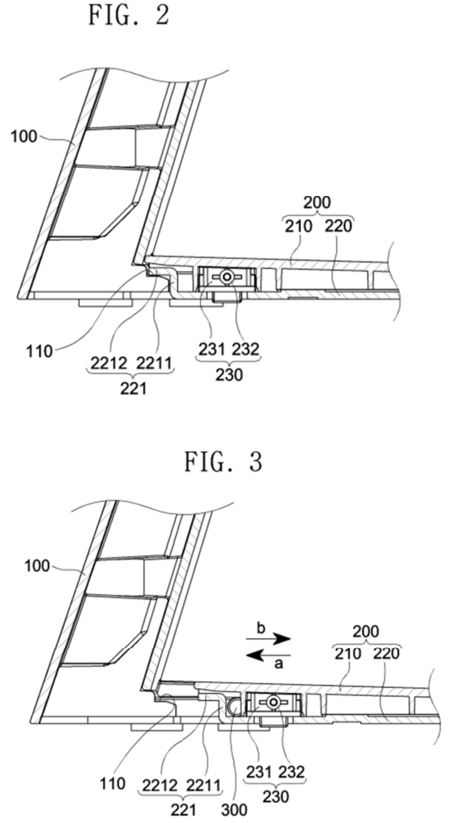

Specifically, the locking stepped portion 110 on which the latch 221 of the stand plate 200 is seated is formed on the stand frame 100, the latch 221 is seated on the locking stepped portion 110 when the stand plate 200 slides in the first direction a, and the latch 221 is moved away from the locking stepped portion 110 when the stand plate 200 slides in the second direction b (refer to FIG. 2).

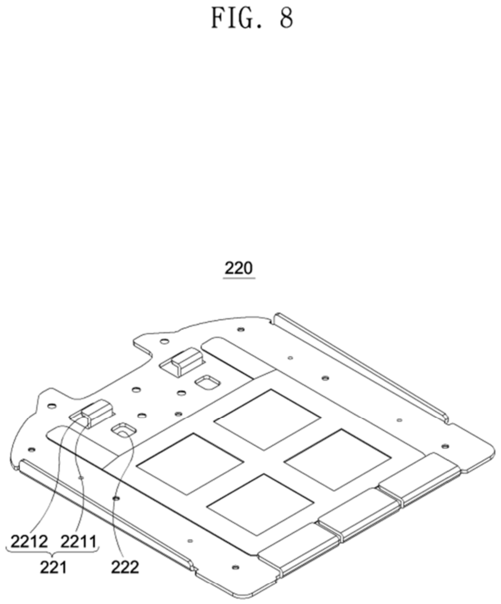

In this case, the latch 221 may include a locking pillar 2211 protruding upward from the lower plate 220 and a locking head 2212 bent toward the stand frame 100 from an upper end of the locking pillar 2211 (refer to FIG. 8).

Secondly, when the hinge shaft 300 is disposed in the rotation space 212, a bottom surface of the hinge shaft 300 may be supported by the lower plate 220, a top surface of the hinge shaft 300 may be supported by the upper plate 210, one side surface of the hinge shaft 300 may be supported by the locking pillar 2211, and the other side surface of the hinge shaft 300 may be supported by the locking member 231. That is, four surfaces of the rotation space may be formed by components that respectively support surfaces of the hinge shaft 300 (refer to FIG. 6).

Accordingly, an environment that allows a rotation of the hinge shaft 300 is formed. Under the environment, the stand plate 200 may be rotation-driven by using a position of the hinge shaft 300 as a rotation axis.

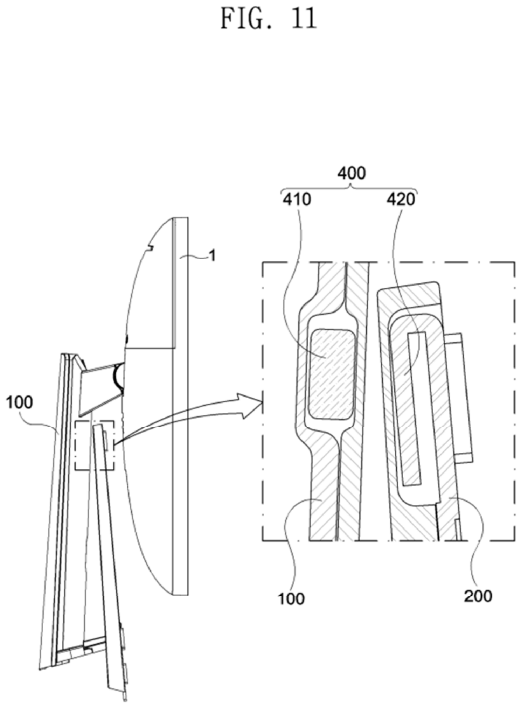

An end A of the stand plate 200 in accordance with an embodiment of the present invention may be hinge-driven toward the stand frame 100 when the hinge shaft 300 is disposed in the rotation space 212. Here, a first magnet 410 may be disposed at the end A, and a second magnet 420 having a polarity opposite to that of the first magnet 410 may be disposed at a predetermined position of the stand frame 100 that is brought into proximity to the end A by a rotation driving of the stand plate 200 (refer to FIG. 11).

Accordingly, when the stand plate 200 is hinge-driven and moved inside the monitor 1, a position of the stand plate 200 may be fixed.

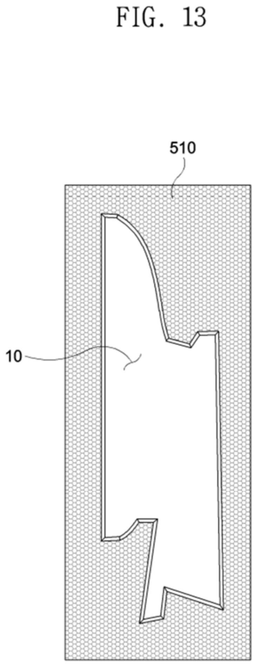

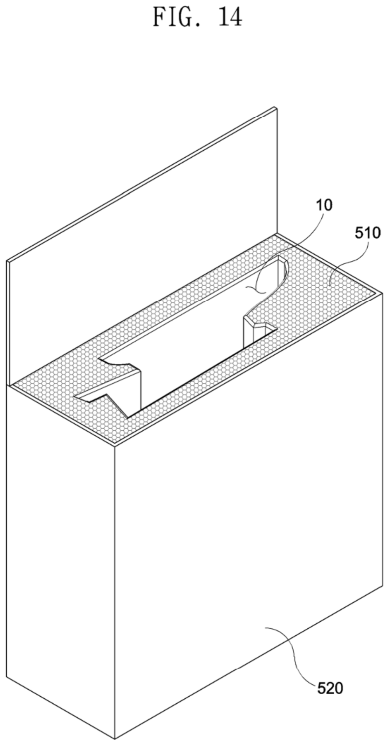

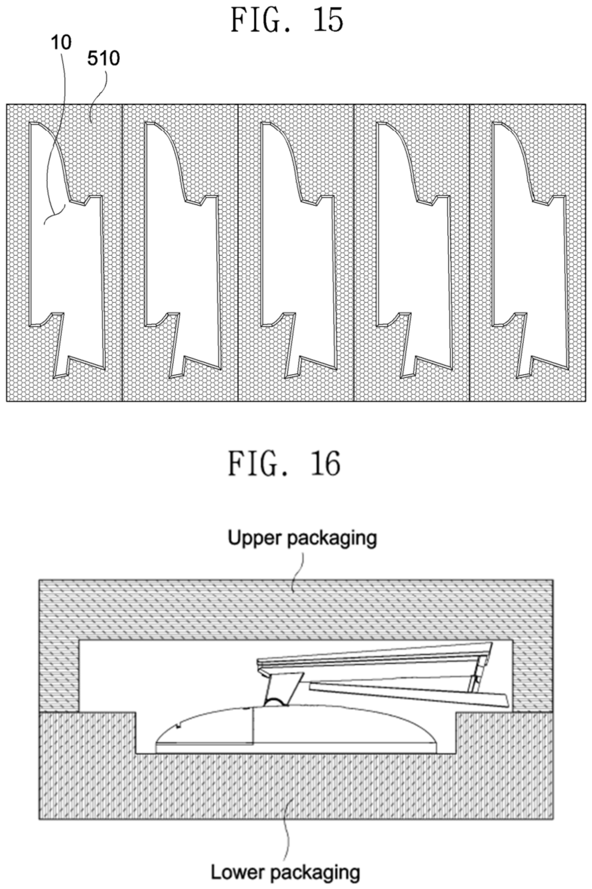

Hereinafter, a packaging of a monitor set to which the foldable stand in accordance with an embodiment of the present invention is applied will be described (refer to FIGS. 13 to 16).

The packaging of the monitor set in accordance with the present invention includes a first state A, in which the stand plate 200 is not hinge-driven, and a second state B, in which the stand plate 200 is hinge-driven. In this case, the packaging of the monitor set may include a buffer box 510 including an insertion groove 10 having a shape corresponding to that of the monitor set to which the foldable stand in the second state B is mounted and an accommodation box 520 in which the buffer box 510 is accommodated.

In the second state B, a conventional monitor set and the monitor set to which the foldable stand in accordance with the present invention is applied have different shapes. When the monitor set in accordance with the present invention is in the second state B, the stand plate 200 may be hinge-driven to be brought into proximity to the stand frame 100, and thus, a size of an entire shape of the monitor set may be minimized.

Accordingly, the packaging may be performed by using only the buffer box 510 having a size extremely less than that of the conventional monitor set. Furthermore, a plurality of monitor sets may be packaged in one buffer box 510.

Although the exemplary embodiments of the present invention have been described, it is understood that the present invention should not be limited to these exemplary embodiments but various changes and modifications may be made by one ordinary skilled in the art within the spirit and scope of the present invention as hereinafter claimed.

### INDUSTRIAL APPLICABILITY

The present invention is industrially applicable in the field of monitors.

### SEQUENCE LISTING FREE TEXT

1: Monitor
100: Stand frame
200: Stand plate
300: Hinge shaft
400: Magnet
500: Packaging

## Claims

1. A foldable stand comprising:
a stand frame (100) coupled to a monitor (1); and
a stand plate (200) configured to support the stand frame (100),
wherein the monitor (1) is hinge-driven with respect to the stand frame (100), and
the strand plate (200) is hinge-driven with respect to the stand frame (100),
wherein the stand frame (100) comprises a hinge shaft (300) configured to hinge-drive the stand plate (200), and the hinge shaft (300) is disposed in a fixed space (211) when the stand plate (200) slides in a first direction (a) toward the stand frame (100) and is disposed in a rotation space (212) when the stand plate (200) slides in a second direction (b) toward the outside of the stand frame (100).

2. The foldable stand of claim 1, wherein the stand plate (200) comprises a stopper (230) configured to restrict the hinge shaft (300) in the fixed space (211).

3. The foldable stand of claim 2, wherein the stand plate (200) comprises a top plate (210) and a bottom plate (220) coupled to a lower portion of the top plate (210), and
the stopper (230) is disposed between the top plate (210) and the bottom plate (220).

4. The foldable stand of claim 3, wherein a locking stepped portion (110) on which a latch (221) of the stand plate (200) is seated is formed on the stand frame (100),
the latch (221) is seated on the locking stepped portion (110) when the stand plate (200) slides in the first direction (a), and
the latch (221) is spaced apart from the locking stepped portion (110) when the stand plate (200) slides in the second direction (b).

5. The foldable stand of claim 4, wherein the latch (221) comprises:
a locking pillar (2211) protruding upward from the lower plate (220); and
a locking head (2212) bent toward the stand frame (100) from an upper end of the locking pillar (2211).

6. The foldable stand of claim 5, wherein the stopper (230) comprises:
a locking member (231) configured to restrain both ends of the hinge shaft (300) when the hinge shaft (300) is disposed in the fixed space (211); and
an elastic member (232) configured to press the locking member (231) toward the hinge shaft (300).

7. The foldable stand of claim 6, wherein an insertion groove (2311) into which an end of the hinge shaft (300) is inserted is defined in the locking member (231).

8. The foldable stand of claim 7, wherein, when the hinge shaft (300) is disposed in the rotation space (212),
a bottom surface of the hinge shaft (300) is supported by the lower plate (220),
a top surface of the hinge shaft (300) is supported by the upper plate (210),
one side surface of the hinge shaft (300) is supported by the locking pillar (2211), and
the other side surface of the hinge shaft (300) is supported by the locking member (231).

9. The foldable stand of claim 8, wherein an end (A) of the stand plate (200) is hinge-driven toward the stand frame (100) in a state in which the hinge shaft (300) is disposed in the rotation space (212),
wherein a first magnet (410) is disposed at the end (A), and
a second magnet (420) having a polarity opposite to that of the first magnet (410) is disposed at a predetermined position of the stand frame (100) that is brought into proximity to the end (A) by a rotation driving of the stand plate (200).
